# EUROPEAN PATENT SPECIFICATION

(11) **EP 0 457 734 B1**
(45) Date of publication and mention of the grant of the patent: **12.10.1994**
(21) Application number: 91830145.8
(22) Date of filing: 16.04.1991
(51) Int. Cl.: G01K 7/36

(54) **A method of detecting the maximum temperature to which a mechanical part made of ferromagnetic material has been subjected**
Verfahren für die Erfassung der Höchsttemperatur der ein mechanisches Element aus ferromagnetischem Material ausgesetzt worden ist
Procédé pour la détection de la température maximale à laquelle un élément mécanique de matériau ferromagnétique a été soumis

(30) Priority: 30.04.1990 IT 6732190
(43) Date of publication of application: 21.11.1991
(73) Proprietor: FIAT AUTO S.p.A., 10135 Torino (IT)
(72) Inventor: Ansaldi, Ermanno, I-10139 Torino (IT); Malvicino, Carloandrea, I-10146 Torino (IT); Palazzetti, Mario, I-10051 Avigliana (Torino) (IT)
(74) Representative: Bosotti, Luciano

(56) References cited:
- EP-A- 0 011 862
- DE-A- 2 654 837
- DE-A- 2 658 203
- DE-U- 8 626 090
- NL-A- 7 113 395

## Description

Several methods of monitoring the actual temperature of a ferromagnetic part are known in the field (EP-A-11862 and DE-A-2654837).

The present invention relates to a method of detecting the maximum temperature to which a mechanical part made of ferromagnetic material has been subjected.

The object of the present invention is to provide a method of the type indicated above which is easy to carry out and accurate over a wide temperature range.

The subject of the present invention is a method of the type indicated above, characterised in that it comprises the steps of:

permanently magnetising at least a portion of the mechanical part which may then be subjected to operations, treatments and/or working (not at the point marked) which involve a temperature rise,

detecting the signal emitted by a magnetic field sensor located at a given distance from the magnetic mark, and

comparing the value of the signal with a calibration curve obtained from similar signals detected at the same distance from magnetic marks on parts which have been brought to different (maximum) temperatures beforehand and thus deriving the desired value of the maximum temperature reached by the mechanical part.

It has in fact been discovered that the magnitude of the signal detected depends on the maximum temperature to which the part has been brought beforehand and is unaffected by the time which has elapsed before and after that moment.

Advantages and characteristics of the present invention will become clear from the detailed description which follows, with reference to the appended drawings, provided purely by way of non-limiting example, in which:
Figure 1 is a schematic view of a device for carrying out the method of the invention,
Figure 2 is a perspective view of an electromagnet used in carrying out the method of the invention, and
Figure 3 is a graph showing the temperature dependence of the signal emitted by a sensor used in the method of the invention.

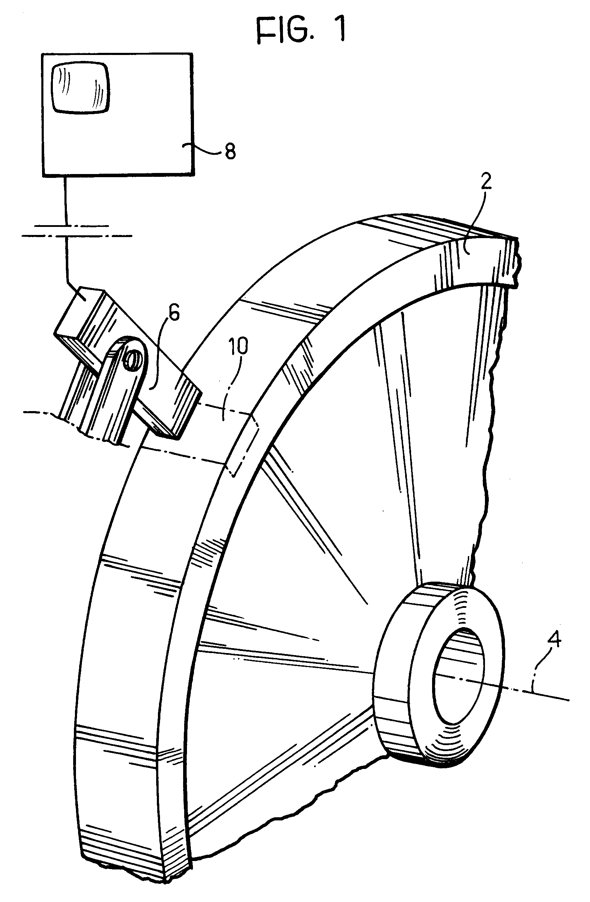

Figure 1 shows a magnetic field sensor 6 for example a linear Hall-effect sensor, such as the LOHET II SS94A1 produced by Microswitch of the Honeywell Group. The sensor 6 is connected to a device 8 for amplifying and displaying the signals emitted, in known manner not described further. A generic component (e.g. a flywheel) 2 of ferromagnetic material, for example of cast iron, is mounted in known manner for rotation about its own central axis 4 so that its periphery is at a distance of no more than 1.5 mm from the sensor 6 .

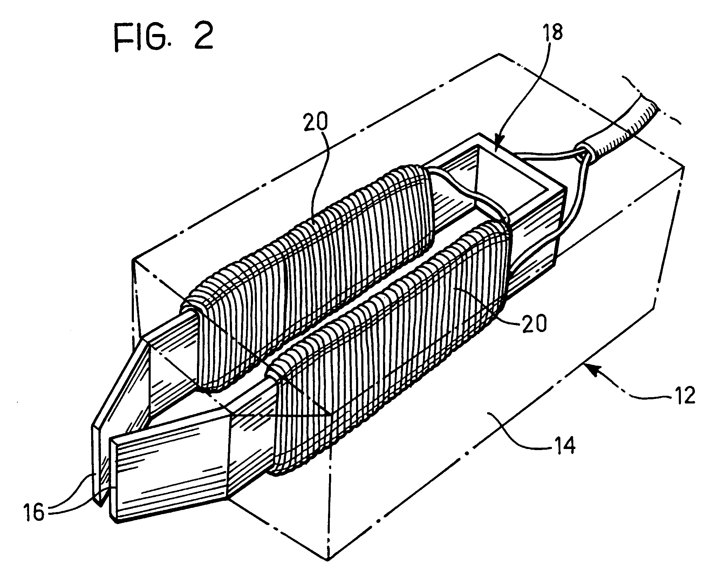

A surface portion 10 of the part 2 has been magnetised permanently beforehand, for example by an electromagnet 12 shown in Figure 2. This is constituted by a casing 14 of plastics material from which project the converging ends 16 of a substantially U-shaped core 18 of laminated ferromagnetic material (for example, soft sheet-iron).

Coils 20 are wound on the main arms of the core 18 and connected to an electrical supply circuit, not shown. The ends 16 of the core 18 are brought into contact with the portion 10 of the part 2 and current is passed through the coils 20 so that the surface portion 10 of the part 2 is permanently magnetised.

After this magnetic marking step, the part 2 may be subjected to mechanical operations (not at the point marked) and to treatments which cause its temperature to rise and of which it is necessary to know the maximum value.

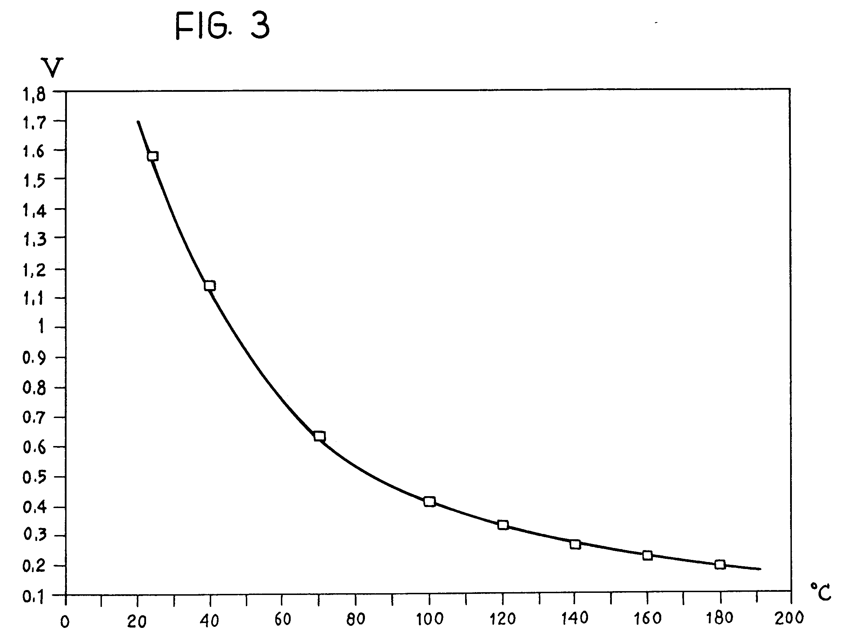

When the magnetised portion 10 of the surface of the part 2 is subsequently brought to a given distance from the sensor 6 , the latter emits a signal whose value, expressed in volts as shown in Figure 3, depends on the maximum temperature to which the part has been subjected and is unaffected by the time which has elapsed since that moment or since any other heat treatments undergone.

It suffices, therefore, to compare the signal obtained with a calibration curve formed from signals emitted by the sensor when it is located at the same distance from magnetic marks on parts which have been brought to different maximum temperatures beforehand in order to derive the value of the maximum temperature to which the flywheel 2 has been subjected.

For a material such as cast iron, it has been found experimentally that signals of appreciable strength are obtained up to maximum temperatures of the order of approximately 180°. If measurements relating to higher temperatures are to be made, it is necessary to apply one or more plates of other suitable ferromagnetic materials to the cast iron part.

Once magnetised and tested by a magnetic field sensor, these materials give significant signals even after they have been brought to temperatures higher than that referred to in the case of cast iron.

Naturally, the principle of the invention remaining the same, the details of construction and forms of embodiment may be varied widely with respect to those described and illustrated purely by way of example, without thereby departing from its scope as defined in the claims.

## Claims

1. A method of detecting the maximum temperature to which a mechanical part (2) made of ferromagnetic material has been subjected, characterised in that it comprises the steps of:
magnetising at least a portion (10) of the mechanical part (2) to provide a residual magnetization; the mechanical part (2) except at the magnetized portion (10) may then be subjected to operations, treatments and/or working which involve a temperature rise,
subsequently detecting the signal emitted by a magnetic field sensor (6) located at a given distance from the magnetic mark (10), and
comparing the value of the signal with a calibration curve obtained from similar signals detected at the same distance from magnetic marks on parts which have been brought to different maximum temperatures beforehand and thus deriving the desired value of the maximum temperature reached by the mechanical part between the magnetising and the detecting.

2. A method according to Claim 1, characterised in that the portion (10) of the part (2) is magnetised by an electromagnet (12) which is brought close to the portion (10).

3. A method according to any one of the preceding claims, characterised in that the sensor (6) is a Hall-effect sensor.

4. A method according to any one of the preceding claims, characterised in that the sensor (6) is kept at a distance of no more than 1.5 mm from the surface of the part (2).

## Patentansprüche

1. Verfahren zur Erfassung der Höchsttemperatur, der ein aus ferromagnetischem Material gefertigtes mechanisches Teil (2) ausgesetzt worden ist,
**dadurch gekennzeichnet,**
daß es die Schritte umfaßt:
Magnetisieren zumindest eines Abschnitts (10) des mechanischen Teils (2), um eine Restmagnetisierung zu erhalten; das mechanische Teil (2) kann dann außer am magnetisierten Abschnitt (10) einen Temperaturanstieg beinhaltenden Arbeitsvorgängen, Behandlungen und/oder einer Bearbeitung unterworfen werden,
anschließendes Erfassen des von einem Magnetfeldsensor (6), der mit einem gegebenen Abstand von der magnetischen Markierung (10) angeordnet ist, ausgesendeten Signals und
Vergleichen des Werts des Signals mit einer Kalibrierungskurve, die man aus ähnlichen, unter demselben Abstand von magnetischen Markierungen an Teilen, welche zuvor auf verschiedene Höchsttemperaturen gebracht worden sind, erfaßten Signalen erhält, und auf diese Weise Herleiten des gewünschten Werts der von dem mechanischen Teil zwischen der Magnetisierung und der Erfassung erreichten Höchsttemperatur.

2. Verfahren nach Anspruch 1,
**dadurch gekennzeichnet,**
daß der Abschnitt (10) des Teils (2) mittels eines Elektromagneten (12) magnetisiert wird, welchen man nahe an den Abschnitt (10) heranbringt.

3. Verfahren nach einem der vorhergehenden Ansprüche,
**dadurch gekennzeichnet,**
daß der Sensor (6) ein Hall-Effekt-Sensor ist.

4. Verfahren nach einem der vorhergehenden Ansprüche,
**dadurch gekennzeichnet,**
daß man den Sensor (6) mit einem Abstand von nicht mehr als 1,5 mm von der Oberfläche des Teils (2) hält.

## Revendications

1. Procédé pour détecter la température maximale à laquelle une pièce mécanique (2) faite de matière ferromagnétique a été soumise, caractérisé en ce qu'il comprend les phases consistant à :
aimanter, au moins une portion (10) de la pièce mécanique (2) pour obtenir une aimantation résiduelle ; la pièce mécanique (2), à l'exception de la por-tion aimantée (10), peut ensuite être soumise à des opérations, traitements et/ou usinages qui impliquent une élévation de température,
puis détecter le signal émis par un capteur de champ magnétique (6) placé à une distance fixe de la marque magnétique (10), et
comparer la valeur du signal à une courbe d'étalonnage obtenue à partir de signaux similaires détectés à la même distance des marques magnétiques sur des pièces qui ont été préalablement portées à différentes températures maximales, et déduire ainsi la valeur désirée de la température maximale atteinte par la pièce mécanique entre l'aimantation et la détection.

2. Procédé selon la revendication 1, caractérisé en ce que la portion (10) de la pièce (2) est aimantée par un électro-aimant (12) qui est placé contre la portion (10).

3. Procédé selon une quelconque des revendications précédentes, caractérisé en ce que le capteur (6) est un capteur à effet Hall.

4. Procédé selon une quelconque des revendications précédentes, caractérisé en ce que le capteur (6) est maintenu à une distance de la surface de la pièce (2) qui n'est pas supérieure à 1,5 mm.
